# EUROPEAN PATENT SPECIFICATION

(11) **EP 4 012 554 B1**
(45) Date of publication and mention of the grant of the patent: **18.10.2023**
(21) Application number: 20914316.3
(22) Date of filing: 17.01.2020
(51) Int. Cl.: G06F 8/656, G06F 8/65

(54) **CHIP PATCHING METHOD AND CHIP**
CHIP-FLICKVERFAHREN UND CHIP
PROCÉDÉ DE CORRECTION DE PUCE ET PUCE

(43) Date of publication of application: 15.06.2022
(73) Proprietor: Shenzhen Goodix Technology Co., Ltd., Shenzhen, Guangdong 518045 (CN)
(72) Inventor: ZOU, Nan, Shenzhen, Guangdong 518045 (CN)
(74) Representative: Pfenning, Meinig & Partner mbB
(86) International application number: PCT/CN2020/072675
(87) International publication number: WO 2021/142761

(56) References cited:
- CN-A- 102 156 661
- CN-A- 108 388 443
- CN-A- 110 162 328
- CN-A- 110 187 920
- GB-A- 2 292 470
- US-A- 6 122 731
- US-A1- 2008 263 533

## Description

### TECHNICAL FIELD

Embodiments of the present application relate to the field of computer technologies, and in particular, to a method for patching a chip and a chip.

### BACKGROUND

Patch technology can repair errors in a program, and thus has received more and more attention.

Currently, a program is patched based on a jump instruction, but the jump instruction cannot achieve a long address jump. This has strict requirements on a storage location of a replacement function, which is not beneficial to the layout space design of a chip for a memory.

US2008263533A1 discloses a method and a circuit of execution, by a processing unit, of at least one patch of at least one first program stored in a first non-reprogrammable non-volatile memory, the patch being stored ma second memory, and wherein: each current address of an instruction of the first program provided by the processing unit is compared with values preloaded in at least one volatile storage element; in case of an identity between the current address and a preloaded value, an interrupt is triggered, this interrupt triggering a search, from a correspondence table, for an address of a patch in the second memory; and the patch is executed.

GB2292470A discloses a data processing system having a central processor unit core 8 operating under control of program instructions stored within a read only memory 10 maybe subject to mistakes within the program instructions. In order to deal with this, patch program instructions are stored within a patch memory 6. A breakpoint detector 14 monitors the address bus to the read only memory 10 and detects when an access is made to an address known to contain a mistake. Upon such an access, an interrupt handler 16 serves to divert processing to the patch stored within the patch memory 6 by writing a new value into a program counter register 12 coupled to the central processor unit core 8. At the end of the patch, control is returned to the program instructions of the read only memory 10.

### SUMMARY

The invention is set out in the appended set of claims.

### BRIEF DESCRIPTION OF THE DRAWINGS

FIG. 1 is a schematic diagram of traditional patching based on a jump instruction;
FIG. 2 is a schematic diagram of a storage location of a function address;
FIG. 3 is a schematic diagram of patching based on two jump instructions;
FIG. 4 is a schematic flowchart of a method for patching a chip provided by an embodiment of the present application;
FIG. 5 is a schematic diagram of an interrupt based on an SVC mechanism provided by an embodiment of the present application;
FIG. 6 is a schematic diagram of patching based on an SVC interrupt provided by an embodiment of the present application;
FIG. 7 is a function execution flowchart of patching based on an SVC interrupt;
FIG. 8 is a schematic diagram of a function address replacement list provided by an embodiment of the present application; and
FIG. 9 is a schematic block diagram of a chip provided by an embodiment of the present application.

### DESCRIPTION OF EMBODIMENTS

Technical solutions of the present application are described below in combination with accompanying drawings.

Under the current rapid development of science and technology, development of integrated circuit is quite dramatic, and demand for a micro control unit (micro controller, MCU) chip is also developing rapidly due to the influence of market. However, the MCU chip has a feature, that is, when the chip is manufactured, a piece of code (i.e., a program) is needed to be stored in an internal read-only memory (ROM) space to execute a power-on boot program or other programs with specific functions. After these programs are taped out on the chip, the programs on the chip cannot be modified again. This requires that the stored program must not have any fault, otherwise the faulty chip will not be able to be used again.

In order to solve this high-risk problem, an erroneous function in a program can be replaced by patch technology at present, so that the program can run correctly and the chip can continue to be used. Due to the above functions, patch technology has received more and more attention.

Errors in the program often exist in one or more functions, and these original functions with errors will be called by other functions. Although it is difficult to find these call functions, it is easy to find the original functions with errors. Therefore, the key operation of patching should be focused on these original functions with errors. The process of patching is: when calling these erroneous original functions, jumping from the erroneous original functions to modified functions (namely, patch functions), and then returning to the original programs after the patch functions have been executed. In this way, the erroneous original functions will never be executed, thus completing the modification to the program.

Patch technology generally requires hardware support, and a core of an MCU chip generally can support patch technology. The number of patches is also limited by hardware resources. The more patches hardware can support, the more functions it can repair, and the less likely a chip is wasted.

Therefore, if it is desired that a chip support more patches, requirements for chip hardware are higher, and costs of the chip increase correspondingly.

An embodiment of the present application does not specifically limit the type of core of a chip. For example, the core of the chip may be ARM, or X86, million instructions per second (MIPS), PowerPC, etc.

Description is made by taking ARM as a core. ARM provides a patch method based on flash patch and breakpoint (FPB) hardware.

Current patch technology refers to replacing an original old function with a new function to achieve the purpose of correcting a program. For example, when the program runs to a patched function, a jump instruction is used to make the program jump to an address of the patch function to run the patch function. After the patch function is executed, the original program is returned to for continuous execution.

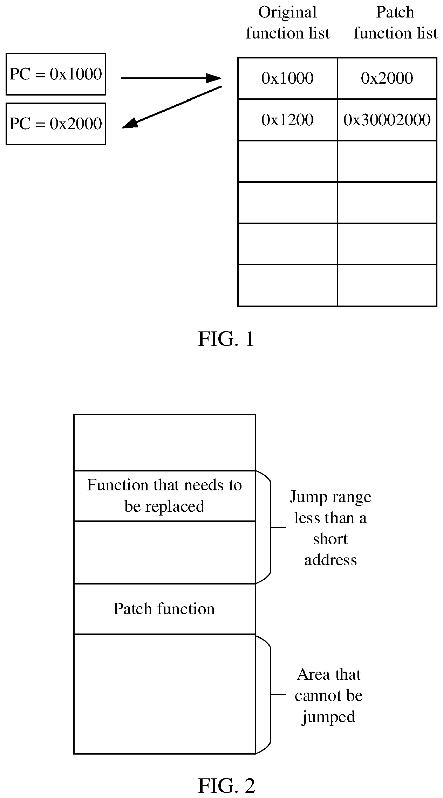

Below, patch technology implemented by an FPB mechanism is described with reference to FIG. 1.

At present, cores of an ARM cortex-m series all provide an FPB mechanism, which is specially used to patch an ROM code of a chip. The mechanism of FPB is to create a list of function that needs to be replaced, that is, an original function list, and configure the list in a hardware FPB register, and then create another function list, that is, a patch function list which is mainly used to store an address of a new function. The original function list and the patch function list have a correspondence relationship, and these two lists and their correspondence relationship are stored in the FPB register. When a program counter (PC) pointer runs to a function A that needs to be replaced, the FPB automatically responds, and finds an address of a new function, and automatically assigns the address of the new function to the PC pointer, so that the PC pointer will automatically jump to the new function for execution.

As shown in FIG. 1, when a PC pointer runs to an address 0x1000, a processor detects that the address 0x1000 is stored in a register, and the FPB automatically responds so that the processor can execute a jump instruction. According to a correspondence relationship between an original function list and a patch function list, the processor finds that an address corresponding to the address 0x1000 is 0x2000. Then the PC pointer will jump to the address 0x2000 to execute a patch function.

Such replacement function technology is generally implemented with a jump instruction. Due to structural limitation of the jump instruction, the jump instruction can only achieve a short address jump, rather than a long address jump. For example, a jump instruction is in a structure of instruction + address of patch function, and the instruction + the address of patch function needs to be stored in a register. If the register is in 32 bits, it means that storage space of the instruction + the address of patch function is 32 bits in total. Since the instruction needs to occupy a part of the storage space, the storage space of the address of patch function is less than 32 bits, which causes a system not to be able to perform a full address jump within the range of 32 bits.

It can be understood that a long address jump in an embodiment of the present application can also be understood as a full address jump.

As shown in FIG. 2, if an original function and a patch function are both located in a short address jump range in a memory (such as a PowerPC processor, with an address range being 0x0~16M), a jump instruction can jump to a patch function for execution. However, if a distance between an address of the original function and an address of the patch function in the memory is greater than the short address jump range, the jump instruction cannot jump to the patch function for execution.

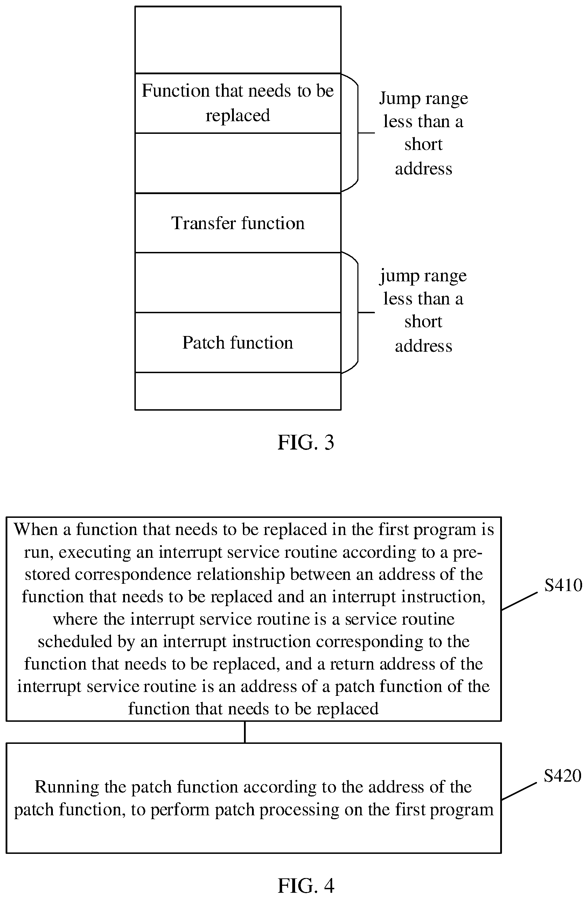

In order to realize a long address jump, an embodiment of the present application may be implemented by multiple jump instructions. For example, a long address jump may be implemented through two jump instructions, as shown in FIG. 3. First, a first jump instruction is used to jump to a fixed address range and find a transfer function. In the transfer function, a second jump instruction is used to jump to a final address and find a patch function.

In this method, a distance between a storage location of the transfer function, and an address of the patched function and an address of the patch function should not be too far, and needs to be within a short address jump range, otherwise the jump cannot be realized. Therefore, the method of multiple jumps places higher requirements on the storage address of the transfer function. In addition, the method of multiple jumps results in higher design complexity of instructions.

An embodiment of the present application provides a method for patching a chip, which performs transfer through an interrupt instruction. The method can realize a long address jump without limitation of the range of a jump address, and moreover, implementation manner is relatively simple.

Below, an interrupt processing process is described.

Interrupt means that when a processor is executing a program normally, the processor temporarily suspends the currently executing program due to triggering of an internal or external event or presetting of a program, saves relevant information of the executed program in a stack, and then turns to execute an interrupt service subprogram of the internal or external event, or event preset by the program; and after the interrupt service subroutine is executed, the processor then obtains the information of the interrupted program saved in the stack, and continues to execute the interrupted program. This process is called an interrupt.

There are three types of interrupts: 1. soft interrupt or internal interrupt, 2. external interrupt or hard interrupt, and 3. exception. An interrupt described in an embodiment of the present application may be any one of these three types.

Since a soft interrupt is implemented by an interrupt instruction, it can be set manually according to needs, and is more flexible, simple to implement and easy to operate. Therefore, preferably, an embodiment of the present application adopts a soft interrupt for transfer.

For an external interrupt, an interrupt request signal is generated by an external device and applied to an NMI or INTR pin of a processor, and the processor continuously detects the NMI or INTR pin signal to identify whether an interrupt request occurs. For an internal interrupt, an interrupt request does not require external application of a signal for excitation, but is called by internal interrupt control logic.

Regardless of an external interrupt or an internal interrupt, an interrupt processing process can include the following steps: request an interrupt-respond to the interrupt-close the interrupt-reserve a breakpoint-identify an interrupt source-protect the scene-interrupt a service subprogram-restore the scene-return to the interrupt.

In an embodiment of the present application, address information of a patch function can be added to an interrupt return instruction, so that when an interrupt returns, the patch function can be jumped to for execution, so as to realize patch processing of a chip. After jumping from an interrupt service routine to an original program, an original function with an error may not be executed, but the patch function may be executed so as to ensure the normal operation of the program.

For example, after executing an interrupt service routine, a processor can return to a first program and continue execution from a breakpoint of the first program; however, since a return address of the interrupt service routine is an address of a patch function, the processor runs the patch function after returning to the first program. At this time, a PC pointer can be updated to point to a next function of a function that needs to be replaced in the first program. After the patch function is run, a next instruction can be run according to the location pointed to by the PC pointer, so that the function that needs to be replaced can be skipped and is not executed, thereby avoiding program running errors.

A chip provided by an embodiment of the present application may include a first program, and the first program may be any segment of program stored in the chip. For example, the first program may be an inherent program in the chip, that is, an uneditable program. For another example, the first program may be an editable program in the chip.

After the first program is stored in the chip, the processor of the chip can run the program to realize the corresponding function.

The chip may be, for example, an MCU chip described above, and the first program may be a program stored in the MCU chip during the manufacturing process of the MCU chip. Of course, the chip in the embodiment of the present application may also be another type of chip.

However, when some functions in the first program have errors or need to be replaced, the method in the embodiment of the present application can be used for replacement.

As shown in FIG. 4, a method provided by an embodiment of the present application may include steps S410 to S420.

S410. When a function that needs to be replaced in the first program is run, executing an interrupt service routine according to a pre-stored correspondence relationship between an address of the function that needs to be replaced and an interrupt instruction, where the interrupt service routine is a service routine scheduled by an interrupt instruction corresponding to the function that needs to be replaced, and a return address of the interrupt service routine is an address of a patch function of the function that needs to be replaced.

It can be understood that the first program may be written through an address of a function, the first program may include addresses of multiple functions, and a processor runs the first program by calling the functions stored on the multiple addresses.

Executing the interrupt service routine according to the pre-stored correspondence relationship between the address of the function that needs to be replaced and the interrupt instruction can refer to determining an interrupt instruction corresponding to the function that needs to be replaced according to the pre-stored correspondence relationship between the address of the function that needs to be replaced and the interrupt instruction, then determining an interrupt number according to the interrupt instruction, and executing the interrupt service routine corresponding to the interrupt number according to the interrupt number.

The address of the function in the first program includes an address of a function that has an error or needs to be replaced in the first program. In the embodiment of the present application, a correspondence relationship between an address of a function that needs to be replaced and an interrupt instruction may be created in advance, so that when the function that needs to be replaced is hit, the interrupt instruction can be jumped to according to the correspondence relationship.

The address of the function that needs to be replaced and the interrupt instruction can have a one-to-one correspondence relationship. For example, a list of addresses of functions that need to be replaced and a list of interrupt instructions can be created in advance, and contents of the two lists have a one-to-one correspondence relationship. If there are multiple functions that need to be replaced in the first program, the multiple functions that need to be replaced can correspond to multiple interrupt instructions, and the multiple functions that need to be replaced and the multiple interrupt instructions have a one-to-one correspondence relationship.

During the running process of the first program, when the function that needs to be replaced is run, a system can automatically respond, and find the corresponding interrupt instruction according to the correspondence relationship between the address of the function that needs to be replaced and the interrupt instruction.

That the function that needs to be replaced in the first program is run may mean that a PC pointer points to the function that needs to be replaced.

S420. Running the patch function according to the address of the patch function, to perform patch processing on the first program.

By means of the interrupt instruction, the interrupt service routine that triggers the interrupt can be found. The interrupt instruction may include an interrupt number, and different interrupt sources have different interrupt numbers. Therefore, in the embodiment of the present application, an interrupt number may be used to determine an interrupt source that triggers the interrupt, so as to find the interrupt service routine.

The interrupt number is a code assigned to each interrupt source by a system for identification and processing. The processor can find an entry address of the interrupt service routine through the interrupt number to realize the transfer of the program.

Therefore, the processor can suspend the execution of the first program according to the interrupt instruction, and jump to the interrupt service routine to execute the interrupt service routine. After the interrupt service routine is run, the first program is returned to for continuous execution.

After the interrupt service routine is executed, an original program needs to be returned to for continuous execution. Therefore, each interrupt service routine needs an interrupt return instruction so that the processor can return to the original program to continue execution after an interrupt event is processed.

In the embodiment of the present application, address information of the patch function can be added to the interrupt return instruction, so that when the interrupt returns, the system can automatically jump to the patch function to execute the patch function instead of the function that needs to be replaced, so as to realize the patch processing of the chip.

The patching method provided by the embodiment of the present application is a patching process for the running program. The address of the patch function is not stored in the instruction, but is obtained from another segment of program (such as the interrupt service routine). The address information of the patch function is called by the interrupt service routine. Since the interrupt service routine can call a function at any address, the address of the patch function can be an address of any memory space in the chip, and is not limited by a jump address range. Therefore, a long address jump can be realized by performing patching through the interrupt instruction, which is beneficial to a layout design of storage space of an SRAM and a flash.

For example, for a 32-bit register, the interrupt service routine can call any address within the 32-bit range, so that a full address jump can be realized. It can be understood that, the register is the above-described register configured to store the correspondence relationship between the address of the patch function and the interrupt instruction.

In addition, since the address of the original function and the interrupt instruction corresponding to the address of the original function are pre-stored in the chip, the system can automatically respond and execute the corresponding interrupt instruction without human intervention. For the replacement of multiple identical functions in the program, there is also no need to manually replace each function. According to the pre-stored correspondence relationship, the system can implement multiple replacements, and the operation process is simple.

Addresses of different original functions may correspond to different interrupt instructions, different interrupt instructions may trigger different interrupt service routines, and different interrupt service routines may correspond to different return addresses. One return address corresponds to one address of a patch function, and therefore addresses of different original functions may correspond to addresses of different patch functions through interrupt instructions, and multiple locations of the program may be patched through multiple interrupt instructions.

Therefore, when multiple original functions in the program have errors, a correspondence relationship between addresses of the multiple original functions and multiple interrupt instructions can be stored in the register, and addresses of multiple patch functions can be called through the multiple interrupt instructions to perform patch processing on the program.

The method in the embodiment of the present application may also be applied in a system or software upgrade process, which is not specifically limited.

As a preferred implementation manner, the interrupt instruction in the embodiment of the present application may be a soft interrupt instruction, and the soft interrupt instruction may be a supervisor call (SVC) instruction.

An SVC interrupt is a special interrupt, which is mostly used in software development on an operating system. SVC is used to generate a call request for a system function. For example, the operating system does not allow a user program to access hardware directly, but access the hardware indirectly by such a calling method that the user program uses the SVC to issue a call request for a system service function by providing some system service functions. Therefore, when wanting to control specific hardware, the user program will generate an SVC exception, and then an SVC exception service routine provided by the operating system is executed, and calls a related operating system function, thereby completing a service requested by the user program.

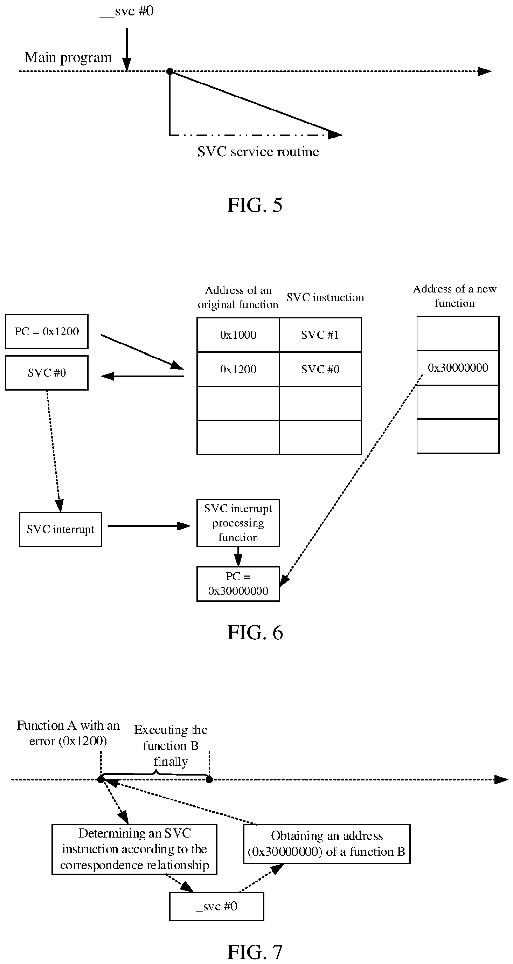

FIG. 5 shows a schematic diagram of an SVC interrupt mechanism. When a system detects an SVC interrupt instruction in the process of running on a main program, the system will jump to an SVC service routine corresponding to the SVC interrupt instruction to run the SVC service routine.

An SVC interrupt is an interrupt that must be given a response immediately. Therefore, through the SVC interrupt, the first program can be ensured to be patched immediately.

Another feature of the SVC interrupt is that only one instruction is needed to realize the interrupt, implementation manner is simple, and storage space occupied by the instruction is small.

The setting method of the SVC instruction is simple, generally for example, _SVC #0.

In addition, the SVC interrupt can support more interrupt numbers, such as 256 interrupt numbers, and each interrupt number corresponds to an interrupt service routine. Since each interrupt service routine can return an address of a patch function, the SVC interrupt can support 256 patches. Therefore, through the SVC instruction, a larger number of patches can be supported, hardware of the chip does not need to be improved, and costs are low.

The correspondence relationship between the address of the function in the first program and the interrupt instruction may be pre-stored in a register of the first component in the chip. The first component belongs to a hardware resource of the chip.

The first component may be the FPB described above. In the register of the FPB, two lists are stored, one is a list of address of a function that needs to be replaced, and the other is a list of interrupt instructions, and contents of the two lists have a one-to-one correspondence relationship.

Below, a patching process of a chip is described by an example of an SVC instruction with reference to FIG. 6 and FIG. 7.

As shown in FIG. 6, there are two lists in an FPB register, one is a list of address of an original function, and the other is a list of SVC instruction. An address of an original function represents an address of a function that needs to be replaced in a first program.

In the lists shown in FIG. 6, an interrupt instruction corresponding to an address 0x1000 of an original function is SVC #1, and an interrupt instruction corresponding to an address 0x1200 of an original function is SVC #0.

The significance of storing the list of SVC interrupt instructions in the FPB register is that when the address of the original function in the list is hit, a processor can determine the SVC instruction corresponding to the address of the original function according to the correspondence relationship in the list. Then the SVC instruction triggers the SVC interrupt, and the SVC instruction may include an interrupt number, so that a system can obtain an SVC interrupt service routine corresponding to the interrupt number according to the interrupt number. After the SVC interrupt service routine is executed, an SVC interrupt return can be performed, and then the processor can run a patch function corresponding to a return address according to the return address of the SVC interrupt. In FIG. 6, after the SVC interrupt service routine is run, an address of a patch function is obtained as 0x30000000 through the return address of the SVC interrupt. A PC pointer can jump to the address 0x30000000, so that the processor runs the patch function at the address 0x30000000.

It can be understood that, the interrupt service routine in the embodiment of the present application may also be referred to as an interrupt processing function.

In FIG. 6 and FIG. 7, a function A in a program is a function with an error, and an address of the function A is 0x1200. When a PC pointer runs to the address 0x1200, a processor detects that the address is stored in an FPB register, and can execute SVC #0 according to a correspondence relationship between an address of an original function and an SVC instruction. The SVC #0 triggers an interrupt event, and an SVC processing function is obtained according to an SVC interrupt number. Then the processor can run the SVC processing function, and after the SVC processing function is run, an address 0x30000000 of a function B is obtained through a return instruction. After the interrupt returns, a PC pointer jumps to the address 0x30000000, so that the processor runs the function B at the address 0x30000000. Finally, the processor executes the function B, rather than the function A.

After the function B is executed, the PC pointer is updated and points to a next instruction after the function A in the program, so that the processor can skip the function A after executing the function B and execute a next function after the function A.

In the embodiment of the present application, a chip may be further patched in a manner of a jump instruction combined with an SVC interrupt.

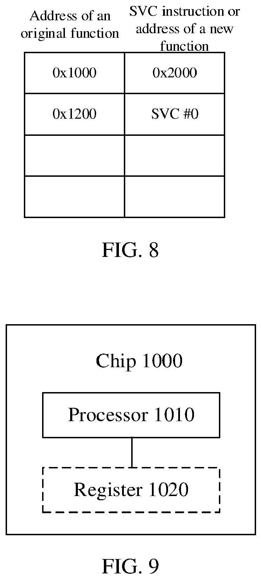

Two lists can be stored in an FPB register, one list is a list of address of an original function, and the other list is a list of the combination of SVC instruction and address of a new function. As shown in FIG. 8, an address 0x1000 of an original function corresponds to an address 0x2000 of a new function, and an address 0x1200 of an original function corresponds to an interrupt instruction SVC #0. When the address of the original function pointed to by a PC pointer is 0x1000, the FPB automatically responds and executes a jump instruction, and the PC pointer jumps to the address 0x2000 of the new function; and when the address of the original function pointed to by the PC pointer is 0x1200, the FPB automatically responds and executes an SVC #0 interrupt, and obtains the address of the new function through the SVC #0.

In the embodiment of the present application, the chip may be patched through the above interrupt methods in any case. In this case, an address of a patch function may be any address in a register, or only when a distance between the address of the function that needs to be replaced and the address of the patch function exceeds an address range that can be jumped by a jump instruction, patching is performed in the method described above.

For example, when the distance between the address of the patch function and the address of the original function is within the address range that can be jumped by the jump instruction, the jump instruction can be used for jumping so as to realize the patch processing of the chip; and when the distance between the address of the patch function and the address of the original function exceeds the address range that can be jumped by the jump instruction, the SVC interrupt can be used to obtain the address of the patched function so as to realize the patch processing of the chip.

The address range that can be jumped by the jump instruction can be understood as a short address jump range.

It can be understood that for different cores, a range of a short address jump can be different. For an ARM core, a range of a short address jump is 0~32M; and if the ARM core uses a thumb instruction set, a range of a short address jump is 0~4M. For a PowerPC core, a range of a short address jump is 0~16M. It should be noted that an address range that can be jumped by a jump instruction may also be a preset address range, which can be preset according to user needs or different core settings.

In addition, an embodiment of the present application further provides a chip. As shown in FIG. 9, the chip 1000 includes a processor 1010, and the processor 1010 is configured to execute any method for patching the chip described above.

Optionally, the chip 1010 further includes a register 1020 configured to store a correspondence relationship between an address of a function that needs to be replaced and an interrupt instruction.

Optionally, the register is an FPB register.

It should be noted that terms used in embodiments of the present application and the claims appended hereto are merely for the purpose of describing particular embodiments, and are not intended to limit the embodiments of the present application.

For example, the use of a singular form of "a", "the", "the above" and "said" in the embodiments of the present application and the claims appended hereto are also intended to include a plural form, unless otherwise clearly indicated herein by context.

A person skilled in the art may be aware that units and algorithm steps of the examples described in the embodiments disclosed in the text may be implemented by electronic hardware or a combination of computer software and the electronic hardware. Whether these functions are implemented in the form of hardware or software depends upon particular applications and design constraints of the technical solutions. A person skilled in the art may use different methods to implement the described functions for each particular application, but it should not be considered that the implementation goes beyond the scope of the embodiments of present application.

If the function is implemented in the form of a software functional unit and is sold or used as an independent product, it may be stored in a computer readable storage medium. Based on such understanding, the nature of the technical solutions of the embodiments of the present application, or the part making contribution to the prior art, or a part of the technical solutions may be embodied in the form of a software product, and the computer software product is stored in a storage medium, including several instructions that cause a computer device (which may be a personal computer, a server, a network device, or the like) to execute all or part of steps in the method of the embodiments of the present application. The foregoing storage medium includes: various media that may store program codes, such as a U-disk, a removable hard disk, a read-only memory, a random access memory, a magnetic disk, a compact disk, and so on.

The foregoing contents are merely specific implementation manners of the embodiments of the present application. The scope of protection is defined in the appended claims.

## Claims

1. A method for patching a chip, wherein the chip comprises a first program, and the method comprises:
when a function that needs to be replaced in the first program is run, determining whether a distance between an address of the function that needs to be replaced and an address of a patch function of the function that needs to be replaced exceeds a short address range that can be jumped by a jump instruction;
under a case that the distance between the address of the function that needs to be replaced and the address of the patch function exceeds the short address range, executing an interrupt service routine according to a pre-stored correspondence relationship between the address of the function that needs to be replaced and an interrupt instruction, wherein the interrupt service routine is a service routine scheduled by an interrupt instruction corresponding to the function that needs to be replaced, and a return address of the interrupt service routine is the address of the patch function (S410); or
under a case that the distance between the address of the function that needs to be replaced and the address of the patch function does not exceed the short address range, jumping to an address of a patch function of the function that needs to be replaced using a jump instruction and
running the patch function according to the address of the patch function, to perform patch processing on the first program (S420);
wherein when the function that needs to be replaced in the first program is run, executing the interrupt service routine according to the pre-stored correspondence relationship between the address of the function that needs to be replaced and the interrupt instruction comprises:
when the function that needs to be replaced in the first program is run, determining an interrupt instruction corresponding to the function that needs to be replaced according to the pre-stored correspondence relationship between the address of the function that needs to be replaced and the interrupt instruction;
determining an interrupt number according to the interrupt instruction; and
executing the interrupt service routine corresponding to the interrupt number according to the interrupt number;
wherein after running the patch function according to the address of the patch function, the method further comprises:
running a next function of the function that needs to be replaced in the first program.

2. The method according to claim 1, wherein the interrupt instruction is a soft interrupt instruction.

3. The method according to claim 1 or 2, wherein the interrupt instruction is a supervisor call, SVC, instruction.

4. The method according to any one of claims 1 to 3, wherein the address of the patch function is any address in a register of the chip.

5. The method according to any one of claims 1 to 4, wherein the address of the function that needs to be replaced in the first program and the interrupt instruction have a one-to-one correspondence relationship.

6. The method according to any one of claims 1 to 5, wherein the correspondence relationship between the address of the function that needs to be replaced and the interrupt instruction is pre-stored in a register of a first component of the chip.

7. The method according to claim 6, wherein a core of the chip is ARM, the first component is a flash patch and breakpoint, FPB.

8. The method according to any one of claims 1 to 7, wherein the chip is a micro control unit, MCU, chip.

9. A chip, wherein the chip comprises a processor (1010), and the processor is configured to execute the method according to any one of claims 1 to 8.

10. The chip according to claim 9, wherein the chip further comprises a register (1020), and the register is configured to store a correspondence relationship between an address of a function that needs to be replaced in a first program and an interrupt instruction.

11. The chip according to claim 10, wherein a core of the chip is ARM, the register is a flash patch and breakpoint, FPB, register.

## Patentansprüche

1. Verfahren zum Patchen eines Chips, wobei der Chip ein erstes Programm umfasst und das Verfahren umfasst:
wenn eine Funktion, die im ersten Programm ersetzt werden muss, ausgeführt wird, Bestimmen, ob ein Abstand zwischen einer Adresse der Funktion, die ersetzt werden muss, und einer Adresse einer Patch-Funktion der Funktion, die ersetzt werden muss, einen kurzen Adressbereich überschreitet, der durch eine Sprunganweisung übersprungen werden kann;
in einem Fall, dass der Abstand zwischen der Adresse der Funktion, die ersetzt werden muss, und der Adresse der Patch-Funktion den kurzen Adressbereich überschreitet, Ausführen einer Unterbrechungsdienstroutine gemäß einer vorgespeicherten Entsprechungsbeziehung zwischen der Adresse der Funktion, die ersetzt werden muss, und einer Unterbrechungsanweisung, wobei die Unterbrechungsdienstroutine eine Dienstroutine ist, die durch einer Unterbrechungsanweisung geplant wird, die der Funktion entspricht, die ersetzt werden muss, und eine Rücksprungadresse der Unterbrechungsdienstroutine die Adresse der Patch-Funktion ist (S410); oder
in einem Fall, dass der Abstand zwischen der Adresse der Funktion, die ersetzt werden muss, und der Adresse der Patch-Funktion den kurzen Adressbereich nicht überschreitet, Springen zu einer Adresse einer Patch-Funktion der Funktion, die ersetzt werden muss, unter Verwendung einer Sprunganweisung, und
Ausführen der Patch-Funktion entsprechend der Adresse der Patch-Funktion zum Durchführen von Patch-Verarbeitung am ersten Programm (S420);
wobei, wenn die Funktion, die im ersten Programm ersetzt werden muss, ausgeführt wird, das Ausführen der Unterbrechungsdienstroutine gemäß der vorgespeicherten Entsprechungsbeziehung zwischen der Adresse der Funktion, die ersetzt werden muss, und der Unterbrechungsanweisung umfasst:
wenn die Funktion, die im ersten Programm ersetzt werden muss, ausgeführt wird, Bestimmen einer Unterbrechungsanweisung, die der Funktion entspricht, die ersetzt werden muss, gemäß der vorgespeicherten Entsprechungsbeziehung zwischen der Adresse der Funktion, die ersetzt werden muss, und der Unterbrechungsanweisung;
Bestimmen einer Unterbrechungsnummer gemäß der Unterbrechungsanweisung; und
Ausführen der Unterbrechungsdienstroutine, die der Unterbrechungsnummer entspricht, gemäß der Unterbrechungsnummer;
wobei das Verfahren nach dem Ausführen der Patch-Funktion gemäß der Adresse der Patch-Funktion ferner umfasst:
Ausführen einer nächsten Funktion der Funktion, die im ersten Programm ersetzt werden muss.

2. Verfahren nach Anspruch 1, wobei die Unterbrechungsanweisung eine Soft-Unterbrechungsanweisung ist.

3. Verfahren nach Anspruch 1 oder 2, wobei die Unterbrechungsanweisung eine "Supervisor Call"-, SVC-, Anweisung ist.

4. Verfahren nach einem der Ansprüche 1 bis 3, wobei die Adresse der Patch-Funktion eine beliebige Adresse in einem Register des Chips ist.

5. Verfahren nach einem der Ansprüche 1 bis 4, wobei die Adresse der Funktion, die im ersten Programm ersetzt werden muss, und die Unterbrechungsanweisung eine eineindeutige Entsprechungsbeziehung aufweisen.

6. Verfahren nach einem der Ansprüche 1 bis 5, wobei die Entsprechungsbeziehung zwischen der Adresse der Funktion, die ersetzt werden muss, und der Unterbrechungsanweisung in einem Register einer ersten Komponente des Chips vorgespeichert wird.

7. Verfahren nach Anspruch 6, wobei ein Kern des Chips ARM ist und die erste Komponente ein "Flash Patch and Breakpoint", FPB, ist.

8. Verfahren nach einem der Ansprüche 1 bis 7, wobei der Chip eine "Micro Control Unit", MCU, ist.

9. Chip, wobei der Chip einen Prozessor (1010) umfasst und der Prozessor dafür ausgelegt ist, das Verfahren nach einem der Ansprüche 1 bis 8 durchzuführen.

10. Chip nach Anspruch 9, wobei der Chip ferner ein Register (1020) umfasst und das Register dafür ausgelegt ist, eine Entsprechungsbeziehung zwischen einer Adresse einer Funktion, die in einem ersten Programm ersetzt werden muss, und einer Unterbrechungsanweisung zu speichern.

11. Chip nach Anspruch 10, wobei ein Kern des Chips ARM ist und das Register ein "Flash Patch and Breakpoint"-, FPB-, Register ist.

## Revendications

1. Procédé de réparation de puce, dans lequel la puce comprend un premier programme et le procédé comprend :
lorsqu'une fonction qui a besoin d'être remplacée dans le premier programme est exécutée, la détermination du fait qu'une distance entre une adresse de la fonction qui a besoin d'être remplacée et une adresse d'une fonction de réparation de la fonction qui a besoin d'être remplacée sort ou non d'une courte plage d'adresses qui peut être sautée par une instruction de saut ;
dans un cas dans lequel la distance entre l'adresse de la fonction qui a besoin d'être remplacée et l'adresse de la fonction de réparation sort de la courte plage d'adresses, l'exécution d'une routine de service d'interruption en fonction d'une relation de correspondance préalablement stockée entre l'adresse de la fonction qui a besoin d'être remplacée et une instruction d'interruption, la routine de service d'interruption étant une routine de service ordonnancée par une instruction d'interruption correspondant à la fonction qui a besoin d'être remplacée, et une adresse de retour de la routine de service d'interruption étant l'adresse de la fonction de réparation (S410) ; ou
dans un cas dans lequel la distance entre l'adresse de la fonction qui a besoin d'être remplacée et l'adresse de la fonction de réparation ne sort pas de la courte plage d'adresses, le saut à une adresse d'une fonction de réparation de la fonction qui a besoin d'être remplacée au moyen d'une instruction de saut, et
l'exécution de la fonction de réparation selon l'adresse de la fonction de réparation, pour l'exécution du processus de réparation sur le premier programme (S420) ;
l'exécution de la routine de service d'interruption en fonction de la relation de correspondance préalablement stockée entre l'adresse de la fonction qui a besoin d'être remplacée et l'instruction d'interruption comprenant, lorsque la fonction qui a besoin d'être remplacée dans le premier programme est exécutée :
lorsque la fonction qui a besoin d'être remplacée dans le premier programme est exécutée, la détermination d'une instruction d'interruption correspondant à la fonction qui a besoin d'être remplacée en fonction de la relation de correspondance préalablement stockée entre l'adresse de la fonction qui a besoin d'être remplacée et l'instruction d'interruption ;
la détermination d'un numéro d'interruption en fonction de l'instruction d'interruption ; et
l'exécution de la routine de service d'interruption correspondant au numéro d'interruption en fonction du numéro d'interruption ;
le procédé comprenant en outre, après l'exécution de la fonction de réparation en fonction de l'adresse de la fonction de réparation :
l'exécution d'une fonction suivante de la fonction qui a besoin d'être remplacée dans le premier programme.

2. Procédé selon la revendication 1, dans lequel l'instruction d'interruption est une instruction d'interruption douce.

3. Procédé selon la revendication 1 ou 2, dans lequel l'instruction d'interruption est une instruction d'appel du superviseur, SVC.

4. Procédé selon l'une quelconque des revendications 1 à 3, dans lequel l'adresse de la fonction de réparation est une quelconque adresse dans un registre de la puce.

5. Procédé selon l'une quelconque des revendications 1 à 4, dans lequel l'adresse de la fonction qui a besoin d'être remplacée dans le premier programme et l'instruction d'interruption ont une relation de correspondance biunivoque.

6. Procédé selon l'une quelconque des revendications 1 à 5, dans lequel la relation de correspondance entre l'adresse de la fonction qui a besoin d'être remplacée et l'instruction d'interruption est préalablement stockée dans un registre d'un premier composant de la puce.

7. Procédé selon la revendication 6, dans lequel un coeur de la puce est un coeur ARM, le premier composant étant un composant flash patch et point d'arrêt, FPB.

8. Procédé selon l'une quelconque des revendications 1 à 7, dans lequel la puce est une puce micro-unité de commande, MCU.

9. Puce, laquelle puce comprend un processeur (1010), et lequel processeur est configuré pour exécuter le procédé selon l'une quelconque des revendications 1 à 8.

10. Puce selon la revendication 9, laquelle puce comprend en outre un registre (1020), et lequel registre est configuré pour stocker une relation de correspondance entre une adresse d'une fonction qui a besoin d'être remplacée dans un premier programme et une instruction d'interruption.

11. Puce selon la revendication 10, dans laquelle un coeur de la puce est un coeur ARM, le premier composant étant un composant flash patch et point d'arrêt, FPB.
